# FASCICULE DE BREVET EUROPEEN

(11) **EP 1 797 248 B1**
(45) Date de publication et mention de la délivrance du brevet: **20.04.2016**
(21) Numéro de dépôt: 05804719.2
(22) Date de dépôt: 07.10.2005
(51) Int. Cl.: G05D 23/13

(54) **CARTOUCHE POUR UN ROBINET MITIGEUR ET ROBINET MITIGEUR COMPORTANT UNE TELLE CARTOUCHE**
KASSETTE FÜR EINE MISCHBATTERIE SOWIE MISCHBATTERIE MIT EINER SOLCHEN KASSETTE
CARTRIDGE FOR A MIXER FAUCET AND MIXER FAUCET COMPRISING SUCH A CARTRIDGE

(30) Priorité: 08.10.2004 FR 0410657
(43) Date de publication de la demande: 20.06.2007
(73) Titulaire: Vernet, 91340 Ollainville (FR)
(72) Inventeur: MACE, Christian, F-91680 BRUYERES LE CHATEL (FR)
(74) Mandataire: Grand, Guillaume
(86) Numéro de dépôt international: PCT/FR2005/002479
(87) Numéro de publication internationale: WO 2006/040456

(56) Documents cités:
- EP-A- 1 120 553
- DE-B- 1 241 220
- FR-A- 2 424 459
- US-A- 4 475 684
- US-B1- 6 257 493

## Description

La présente invention concerne une cartouche pour un robinet mitigeur et un robinet mitigeur équipé d'une telle cartouche, ainsi qu'un ensemble thermostatique de régulation d'un courant de fluide.

L'invention a trait plus particulièrement aux cartouches de robinet alimentées par deux fluides présentant des températures respectives différentes, destinés à être mélangés à l'intérieur de la cartouche au moyen d'au moins deux disques en céramique mobiles l'un par rapport à l'autre. Pour modifier la configuration relative de ces disques, et commander ainsi la température et le débit du mélange, les cartouches sont généralement équipées d'un unique organe de manoeuvre, constitué, en pratique, par un levier plus ou moins incliné par rapport à l'axe central longitudinal de la cartouche. Ce levier est destiné à être manoeuvré par l'utilisateur du robinet de telle sorte que, généralement, une rotation du levier autour de l'axe longitudinal de la cartouche modifie la température du fluide mitigé tandis qu'un basculement du levier, en restant dans un même plan vertical, modifie le débit du mélange. Une composition de ces deux mouvements permet de modifier à la fois la température et le débit. Ainsi, la proportion des deux fluides mélangés peut varier de 100%-0% à 0%-100%, ce qui entraîne que la température du mélange peut varier du « plein froid » au « plein chaud ».

De tels robinets sont couramment utilisés dans les installations de distribution d'eau domestique, dans lesquelles de l'eau chaude est délivrée à une température pouvant atteindre 80°C environ, de sorte que les risques de brûlures sont réels.

En vue de remédier à cet inconvénient, on a proposé de prévoir une butée pour bloquer la rotation du levier avant l'obturation complète du conduit d'arrivée d'eau froide, ce qui permet de limiter la température de l'eau mitigée du côté « chaud ». Cependant, le positionnement de cette butée dépend des conditions de pression et de température de l'eau froide et de l'eau chaude alimentant la cartouche. Par la suite, lorsque, par exemple, la pression d'eau froide chute ou que la température de l'eau chaude augmente, la température de l'eau mitigée augmente de plusieurs degrés et atteint ainsi un niveau où le risque de brûlures subsiste. De plus, en cas de coupure totale d'alimentation en eau froide, l'eau en sortie de la cartouche présente une température égale à celle de l'eau chaude entrante, ce qui est particulièrement dangereux.

Des cartouches thermostatiques à levier unique de réglage sont par ailleurs connues, par exemple de WO-A-96/26475. Elles sont onéreuses et d'un encombrement important qui les rend, en pratique, non utilisables dans des robinets mitigeurs de taille standard qui sont généralement prévus pour recevoir une cartouche de 40 mm de diamètre.

Un autre exemple de cartouche thermostatique est fourni par EP-A-1 048 997. Cette cartouche inclut un conduit de bipasse reliant directement une entrée d'eau froide à une sortie d'eau mélangée, l'obturation de ce conduit étant commandée par un élément thermostatique dont la partie thermosensible est balayée par l'écoulement d'eau mélangée. Si la température de l'eau mélangée est trop élevée, de l'eau froide est directement admise en sortie de la cartouche via le conduit de bipasse. Cependant, en cas d'alimentation en eau froide insuffisante, voire en cas de coupure totale, les risques de brûlures persistent. De plus, l'encombrement des aménagements relatifs au conduit de bipasse rend leur implantation difficile au sein de cartouches de taille standard.

Dans un autre domaine, à savoir celui de la robinetterie traditionnelle, c'est-à-dire dont les corps de robinet ne sont pas prévus pour recevoir des cartouches interchangeables, notamment des cartouches à disques en céramique, FR-A-2 424 459 propose un robinet mitigeur dont le corps intègre un élément thermostatique dont la partie thermosensible est balayée par l'écoulement d'eau mélangée sortant du robinet, tandis que son piston entraîne un clapet d'obturation de l'écoulement d'eau chaude entrant dans le robinet, ce clapet formant une surface pleine agencée perpendiculairement à cet écoulement. Le canal d'entrée de l'eau chaude est muni à cet effet d'une bague d'étanchéité contre laquelle le clapet s'appuie suivant sa direction de translation par le piston lorsque la température de l'eau mélangée atteint une valeur prédéterminée. Si cette température est dépassée, le clapet force sur la bague et l'entraîne en translation le long du canal, en comprimant un ressort dédié, intercalé entre la bague et une paroi du corps du robinet. Ce ressort permet de repousser la bague, jusqu'à sa position initiale, le long du canal d'eau chaude lorsque la température de l'eau mélangée diminue. Ce ressort fait donc office de ressort de surcourse pour l'élément thermostatique et est indispensable au bon fonctionnement du robinet. Ce ressort compense en partie le recul du clapet, lié à la compressibilité de l'élément thermostatique, lorsqu'une forte pression d'eau chaude est appliquée contre le clapet, avec toutefois des risques de fuite. Il occupe une place significative au sein du corps du robinet et augmente de façon substantielle son encombrement, suivant la direction longitudinale de l'élément thermostatique. Le corps du robinet présente par conséquent une dimension longitudinale largement supérieure à celle de robinets standards et donc très largement supérieure au diamètre des cartouches interchangeables à même d'être rapportées dans de tels robinets standards.

Le but de l'invention est de proposer une cartouche qui garantit une meilleure sécurité anti-brûlures, sans nécessiter d'aménagements complexes et encombrants vis-à-vis des cartouches existantes, en particulier en conservant un agencement à deux disques de réglage en céramique et en permettant de respecter le standard dimensionnel de 40 mm pour le diamètre de la cartouche.

A cet effet, l'invention a pour objet une cartouche pour un robinet mitigeur, telle que définie à la revendication 1

La cartouche selon l'invention présente ainsi une fonction de limitation thermostatique de la température du mélange sortant de la cartouche, ce qui prévient ainsi les risques de brûlures. L'agencement des moyens thermostatiques correspondants ne remet pas en cause l'utilisation de la plupart des composants des cartouches existantes, en particulier des disques de réglage en céramique, qui sont des composants à la fois fiables et onéreux, et d'un levier unique de commande du débit et de la température du mélange, ce genre de levier « mono-commande » étant particulièrement répandu et apprécié par les utilisateurs. De plus, grâce à la garniture d'étanchéité qui permet à la fois de fermer de manière étanche le passage du fluide le plus chaud et d'accomoder la surcourse potentielle du piston de l'élément thermostatique, l'encombrement de ces moyens thermostatiques peut être prévu suffisamment faible pour que la cartouche selon l'invention puisse être montée en lieu et place d'une cartouche existante et, en particulier, d'une cartouche de diamètre extérieur de l'ordre de 40 mm.

Des caractéristiques avantageuses de cette cartouche, prises isolément ou selon toutes les combinaisons techniquement possibles, sont énoncées aux revendications 2 à 10.

L'invention a également pour objet un robinet mitigeur, équipé d'une cartouche telle que définie ci-dessus.

L'invention sera mieux comprise à la lecture de la description qui va suivre, donnée uniquement à titre d'exemple et faite en se référant aux dessins sur lesquels :
- la figure 1 est une vue en élévation d'une extrémité d'une cartouche de robinet mitigeur selon l'invention ;
- les figures 2 et 3 sont des sections selon respectivement les plans II-II et III-III de la figure 1 ;
- la figure 4 est une vue analogue à la figure 3, illustrant un état de fonctionnement de la cartouche différent ;
- la figure 5 est une vue en élévation, prise selon la flèche V indiquée à la figure 2, d'un ensemble thermostatique de régulation selon l'invention, équipant la cartouche des figures 1 à 4 ;
- la figure 6 est une vue éclatée en élévation de l'ensemble de la figure 5 ; et
- la figure 7 est une section longitudinale schématique, selon le plan de la figure 3, d'une variante de l'ensemble de régulation des figures 5 et 6.

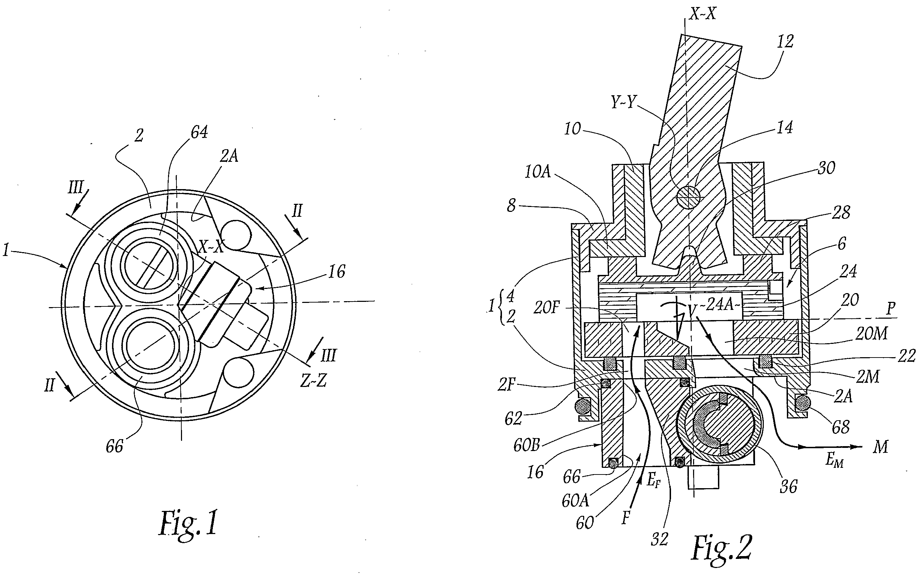

Sur les figures 1 à 4 est représentée une cartouche de robinet mitigeur destinée à équiper un robinet d'alimentation en eau, notamment pour une installation domestique. Par commodité, la suite de la description sera orientée en considérant que le terme « supérieur » se rapporte à la partie haute des figures 2 à 4 tandis que le terme « inférieur » se rapporte à une direction opposée.

Cette cartouche comporte un corps rigide 1 formant boîtier, de face extérieure globalement cylindrique d'axe X-X. Ce boîtier comporte une base inférieure 2 au-dessus de laquelle s'étend une jupe tubulaire 4 centrée sur l'axe X-X. Cette jupe définit un volume interne 6, délimité, inférieurement, par la base 2, et, supérieurement, par un couvercle 8 solidarisé de manière fixe à l'extrémité supérieure de la jupe 4, par exemple par des clips. Le couvercle 8 présente une ouverture centrale à l'intérieur de laquelle est guidée une douille 10 munie d'une collerette 10A plaquée contre la face inférieure du couvercle 8, de sorte que la douille 10 est déplaçable en rotation autour de l'axe X-X par rapport au couvercle fixe. Cette rotation est limitée par un système de butées non représenté, sur un angle d'environ un quart de tour.

Un levier 12, destiné à être manoeuvré par l'utilisateur du robinet pour commander le débit et la température de l'eau délivrée en sortie de la cartouche, donc délivrée par le robinet, est logé dans la douille 10, un arbre 14, d'axe longitudinal Y-Y perpendiculaire à l'axe X-X, liant ces deux pièces. Le levier 12 est ainsi basculable autour de l'axe Y-Y par rapport à la douille 10, et ce sur un angle limité d'environ 25° au moyen d'un système de butées non représenté.

La base 2 du boîtier 1 délimite, dans sa partie d'extrémité inférieure, une cavité 2A globalement cylindrique d'axe X-X et recevant un ensemble thermostatique 16 détaillé plus loin. Cette cavité 2A communique avec le volume interne 6 par trois orifices traversants délimités par la base 2, à savoir :
- un premier orifice d'entrée 2F prévu pour alimenter le volume 6 en de l'eau, appelée « eau froide F » par la suite, provenant de la cavité 2A et présentant une première température,
- un deuxième orifice d'entrée 2C prévu pour alimenter le volume 6 en de l'eau, appelée « eau chaude C » par la suite, provenant de la cavité 2A et présentant une deuxième température supérieure à la première température, et
- un orifice de sortie 2M prévu pour évacuer, du volume 6 vers la cavité 2A, de l'eau, appelée par la suite « eau mitigée M », présentant une température commandée dans la gamme allant de la première à la seconde température.

Le réglage par l'utilisateur de la température et du débit de l'eau mitigée M est réalisé à l'intérieur du volume 6, au moyen des éléments suivants :
- un disque inférieur 20 en céramique, centré sur l'axe X-X, et lié de manière fixe au boîtier 1, par exemple au moyen d'un système d'ergots ; ce disque fixe comporte un passage traversant d'eau froide 20F, un passage traversant d'eau chaude 20C ainsi qu'un passage traversant d'eau mitigée 20M, ces trois passages étant en correspondance avec respectivement les orifices 2F, 2C et 2M de la base 2 du boîtier, avec interposition d'un joint d'étanchéité 22 ;
- un disque supérieur 24 en céramique et plaqué de façon mobile contre la surface supérieure du disque inférieur 20, en formant avec ce dernier une liaison d'appui plan perpendiculaire à l'axe X-X ; les faces en regard des disques 20 et 24, ainsi accolées suivant un plan noté P, sont aptes à assurer l'étanchéité entre les disques, y compris lors des déplacements du disque 24 par rapport au disque fixe 20 ; la face inférieure du disque 24 ménage, au-dessus du plan P, une cavité 24A qui, d'une part, est en communication fluidique permanente avec le passage d'eau mitigée 20M du disque 20 et, d'autre part, est raccordée ou non avec les passages d'eau froide 20F et d'eau chaude 20C selon la position relative du disque 24 par rapport au disque 20 ; et
- un disque d'entraînement 28 plaqué, d'une part, contre la face inférieure de la collerette 10A de la douille 10 et, d'autre part, contre la face supérieure du disque mobile 24 ; ce disque d'entraînement 28 est ainsi lié, par des appuis plans perpendiculaires à l'axe X-X, à la douille 10 et au disque 24 ; le disque 28 est également lié au levier 12 par un système de dentelure 30 constituant une liaison pivot suivant un axe parallèle à l'axe Y-Y.

L'empilement des disques 20, 24 et 28 est maintenu par le joint 22 qui génère une force suffisante pour plaquer ces disques contre la collerette 10A de la douille 10.

A l'exception de la cavité 2A dans la base inférieure 2 du boîtier 1 et de l'ensemble thermostatique 16, les aménagements de la cartouche décrits jusqu'ici sont des aménagements standards pour une cartouche à levier unique de commande et à disques en céramique. L'utilisation de tels disques est appréciée en raison de leur excellente capacité d'étanchéité au niveau de leur plan d'accolement P, les risques de fuite entre ces disques, même après une longue période d'utilisation, étant très faibles.

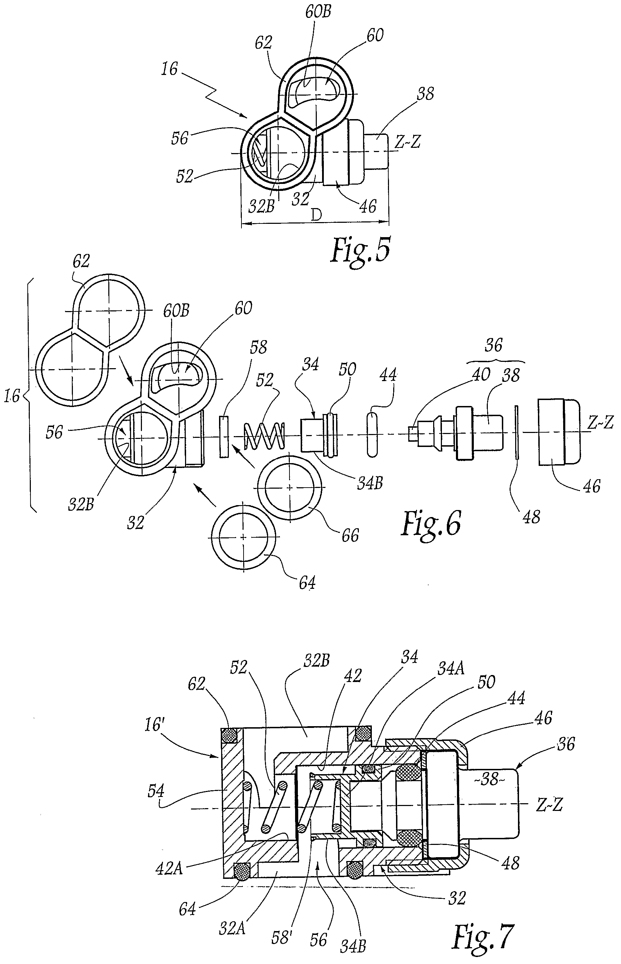

Selon l'invention, la cartouche des figures 1 à 4 est équipée de l'ensemble thermostatique 16 représenté seul aux figures 5 et 6. Cet ensemble comporte essentiellement une embase 32 réalisée en une matière plastique, par exemple analogue à celle du boîtier 1, un clapet tubulaire 34 et un élément thermostatique 36 comprenant une partie thermosensible 38, qui contient une cire dilatable, et un piston 40 qui, sous l'effet de la dilatation de la cire, est déplacé en translation par rapport à la partie 38 suivant un axe Z-Z autour duquel s'étend en longueur l'élément thermostatique.

L'embase 32 délimite un volume interne 42 globalement cylindrique, à l'intérieur duquel est rapporté co-axialement l'élément thermostatique 36 avec interposition d'un joint annulaire 44. Le corps de l'élément thermostatique, qui inclut la partie thermosensible 38, est immobilisé par rapport à l'embase 32 au moyen d'un écrou 46 enfilé autour de la partie thermosensible 38, avec interposition, suivant l'axe Z-Z, d'une rondelle d'étanchéité 48. A l'état assemblé, le piston 40 de l'élément thermostatique est situé à l'intérieur du volume interne 42 de l'embase 32 tandis que sa partie thermosensible 38 est disposée pour l'essentiel à l'extérieur de ce volume.

Du côté opposé, suivant l'axe Z-Z, à la partie thermosensible 38, le volume interne 42 de l'embase 32 débouche radialement sur l'extérieur au niveau d'un orifice inférieur 32A et d'un orifice supérieur 32B délimités par l'embase 32.

Le clapet 34 est monté à coulissement dans le volume interne 42 de l'embase 32, suivant l'axe Z-Z. A cet effet, le clapet est muni, à son extrémité tournée vers l'élément thermostatique 36, d'une bride 50 ménageant un contact coulissant et étanche vis-à-vis de la paroi cylindrique de l'embase délimitant le volume 42.

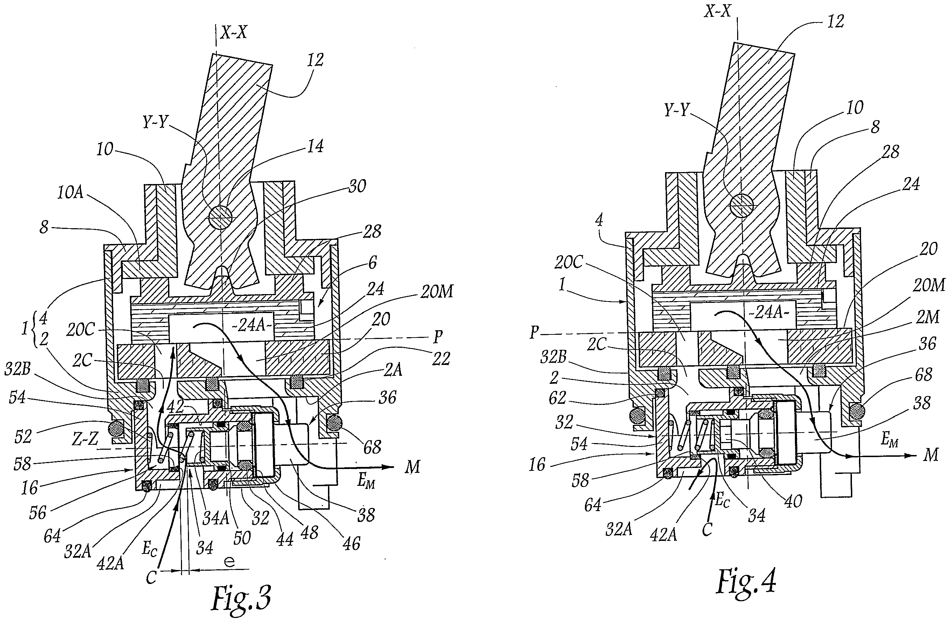

Les déplacements en translation du clapet sont commandés par le piston 40 de l'élément thermostatique 36. A cet effet, le clapet 34 comprend, dans sa partie intermédiaire, une paroi interne transversale 34A en appui sur le piston 40 lorsque ce dernier est déployé vis-à-vis du corps de l'élément thermostatique 36, comme à la figure 4, ou, lorsque ce piston est totalement escamoté, en appui direct contre le corps fixe de l'élément, comme à la figure 3. Pour plaquer le clapet 34 contre l'élément thermostatique 36, un ressort de compression 52 est interposé entre le clapet et l'embase 32, du côté de la paroi 34A opposé à celui de l'élément thermostatique. Ce ressort s'étend avantageusement autour de l'axe Z-Z, avec une de ses extrémités en appui contre la paroi 34A tandis que son extrémité opposée est en appui contre une paroi 54 de l'embase 32 perpendiculaire à l'axe Z-Z.

Les orifices 32A et 32B débouchent dans une partie du volume 42 étanchée, vis-à-vis de l'élément thermostatique 36, par la bride 50 et la paroi 34A du clapet 34. Cette partie du volume 42 et les orifices 32A et 32B définissent ainsi un passage de fluide 56 traversant l'embase 32 suivant une direction globalement radiale à l'axe Z-Z. La circulation d'un fluide dans ce passage dépend cependant de la position du clapet 34 par rapport à l'embase 32. Lorsque le clapet est en appui contre le corps de l'élément thermostatique 36, comme à la figure 3, le clapet est axialement distant de la zone 42A de jonction entre le volume interne 42 et l'orifice inférieur 32A, l'écartement axial correspondant étant noté e, de sorte que cet orifice 32A et le volume 42 sont en communication fluidique. Comme le volume 42 est en communication fluidique permanente avec l'orifice supérieur 32B, le passage 56 est alors circulant. En revanche, lorsque le clapet 34 est translaté en direction de la paroi 54 de l'embase sur une distance supérieure à e, comme à la figure 4, la zone de jonction 42A est obturée et le passage de fluide 56 est coupé.

Pour minimiser les risques de fuites de fluide au niveau de la zone de jonction 42A lorsque le clapet est translaté comme à la figure 4, cette zone est munie d'un anneau d'étanchéité 58 solidarisé à demeure à l'embase 32. Cet anneau est réalisé en une matière élastiquement déformable et présente un diamètre intérieur sensiblement égal au diamètre de la face extérieure cylindrique 34B du clapet 34. L'anneau 58 maintient ainsi un contact étanche sur toute la périphérie du clapet 34 lorsque ce dernier est suffisamment translaté vers la paroi de l'embase 54, et ce même si le clapet est animé de mouvements de translation et glisse contre l'anneau. Autrement dit, lorsque le clapet est suffisamment translaté vers la paroi 54, comme à la figure 4, l'anneau 58, immobile par rapport à l'embase 32, est interposé entre l'obturateur et la zone 42A de l'embase suivant une direction sensiblement radiale à l'axe Z-Z.

L'embase 32 délimite en outre un second passage de fluide 60, distinct du passage 56 et orienté suivant une direction globalement parallèle à celle du passage 56.

L'embase 32 est adaptée pour être rapportée de manière amovible dans la cavité 2A délimitée par la base 2 du boîtier 1 de la cartouche. Comme représenté sur les figures 1 à 4, l'embase 32 est alors plaquée contre le fond de la cavité 2A, de sorte que son orifice supérieure 32B débouche directement dans l'orifice d'entrée d'eau chaude 2C de la base 2 (figure 3), tandis que l'orifice supérieur 60B du passage 60 débouche directement dans l'orifice d'entrée d'eau froide 2F (figure 2). L'orifice de sortie d'eau mitigée 2M débouche, quant à lui, à l'aplomb de l'écrou 46 et de la partie thermosensible 38 de l'élément thermostatique. Dans cette configuration rapportée de l'embase 32, l'axe Z-Z s'étend perpendiculairement à l'axe X-X de la cartouche, ces axes n'étant cependant pas sécants. La jonction du passage 56 avec l'orifice 2C et celle du passage 60 avec l'orifice 2F sont étanchées par un joint double 62.

La cartouche équipée de l'ensemble thermostatique 16 est prévue pour être agencée dans un corps de robinet dont les alimentations en eau chaude C et en eau froide F sont en correspondance avec respectivement l'orifice 32A et l'orifice inférieur 60A du passage 60, avec interposition de joints d'étanchéité 64 et 66, tandis que le conduit d'évacuation d'eau mitigée M du robinet est en communication fluidique avec la zone de débouché de l'orifice 2M dans la cavité 2A, avec interposition d'un joint d'étanchéité 68.

Le fonctionnement de la cartouche est le suivant :
En fonctionnement normal représenté aux figures 2 et 3, c'est-à-dire lorsque le robinet est alimenté simultanément en eau froide F et en eau chaude C et que le levier 12 occupe une position commandant une température mitigée a priori peu élevée, de l'eau froide F monte dans le passage 60 de l'embase 32, puis dans successivement les orifices 2F et 20F pour aboutir dans la cavité 24A du disque supérieur 24. En parallèle, de l'eau chaude C monte dans l'orifice 32A de l'embase 32, pénètre dans le volume 42 en contournant le clapet 34, passe dans l'écartement e défini entre l'extrémité libre du clapet et l'anneau d'étanchéité 58, puis remonte successivement par l'orifice supérieur 32B de l'embase, par l'orifice 2C du boîtier 1 et par l'orifice 20C du disque 20 pour aboutir dans la cavité 24A. L'eau chaude C et l'eau froide F se mélangent alors dans la cavité 24A pour former de l'eau mitigée M. Cette eau mitigée M redescend par successivement les orifices 20M du disque 20 et 2M du boîtier 2 pour sortir de la cartouche et se diriger ensuite vers l'évacuation du robinet, une partie de l'eau mitigée, en aval du disque 20, passant alors autour de la partie thermosensible 38 de l'élément thermostatique 36. Les circulations d'eau froide F, d'eau chaude C et d'eau mitigée M sont respectivement indiquées par les flèches E_{F}, E_{C} et E_{M}.

Tant que la température de la partie thermosensible 38 est inférieure à une valeur seuil prédéterminée T_{d} correspondant à la température de début de mouvement du piston 40 hors de la partie fixe de l'élément thermostatique 36 induit par la dilatation de la cire contenue dans cette partie fixe, le débit et la température de l'eau mitigée M sont réglés en ajustant les sections de passage d'eau chaude C et d'eau froide F entre les disques supérieur 24 et inférieur 20, ces sections de passage correspondant aux sections résultant respectivement de la conjonction de l'orifice d'entrée d'eau chaude 20C du disque 20 avec la cavité de mélange 24A du disque 24 et de la conjonction de l'orifice d'entrée d'eau froide 20F du disque 20 avec cette cavité de mélange. Ces sections s'ajustent en translatant, parallèlement au plan P, le disque supérieur 24 sur le disque inférieur 20 à l'aide du levier 12, par l'intermédiaire du disque d'entraînement 28. Le débit d'eau mitigée M est réglé de la fermeture à la pleine ouverture par basculement du levier 12 autour de l'axe Y-Y tandis que la température de cette eau mitigée est réglée de plein froid à plein chaud par rotation du levier autour de l'axe X-X.

Suite à une action sur le levier de commande 12, à une chute de la pression ou de la température d'eau froide F alimentant le robinet et/ou à une augmentation de la pression ou de la température de l'eau chaude C alimentant le robinet, la température de l'eau mitigée M sortant de la cartouche peut dépasser la valeur seuil de température T_{d}. Dans ce cas, la cire contenue dans la partie thermosensible 38 se dilate et translate le piston 40 suivant l'axe Z-Z par rapport au corps de l'élément thermostatique 36, entraînant le clapet 34 en direction de l'anneau d'étanchéité 58, réduisant ainsi l'écartement e et coupant partiellement la circulation d'eau chaude E_{C} dans le passage 56. Si la température d'eau mitigée atteint une valeur de température appelée par la suite T_{f}, le mouvement de translation imposé au clapet 34 par le piston 40 est tel que ce clapet vient au contact de l'anneau d'étanchéité 58. La circulation d'eau chaude E_{C} le long du passage 56 est alors totalement interrompue. Si la température d'eau mitigée M continue à augmenter et dépasse la température T_{f} associée au début de la coupure totale de la circulation d'eau chaude E_{C}, le piston 40 continue à entraîner en translation le clapet 34 qui coulisse alors à l'intérieur de l'anneau d'étanchéité 58, comme représenté à la figure 4. La circulation d'eau chaude E_{C} reste totalement coupée.

Autrement dit, lorsque la température de l'eau mitigée M sortant de la cartouche présente une valeur comprise entre T_{d} et T_{f}, l'ensemble thermostatique 16 réduit le débit d'eau chaude C en amont des disques 20 et 24 en rapprochant le clapet 34 de l'anneau d'étanchéité 58, faisant ainsi chuter la température de l'eau mitigée. Lorsque la température de l'eau mitigée M sortant de la cartouche est égale ou supérieure à la valeur seuil T_{f}, l'ensemble thermostatique 16 coupe totalement lé passage d'eau chaude 56 et l'eau chaude C ne parvient plus à l'orifice d'entrée 2C du boîtier 1, de sorte que l'eau sortant de la cartouche est alors uniquement constituée de l'eau froide F alimentant la cartouche.

Alors que le piston 40 est déployé, la baisse de la température de l'eau mitigée M, éventuellement jusqu'à la température d'eau froide F, provoque la rétractation du piston et, sous l'effet du ressort 52, le rappel du clapet vers sa position initiale. Ainsi, lorsque la température de l'eau mitigée M redevient inférieure à la valeur T_{f}, le clapet 34 se retire de l'anneau d'étanchéité 58, rétablissant, au moins partiellement, la circulation E_{C} d'eau chaude C dans le passage 56.

L'ensemble thermostatique 16 stabilise ainsi la température de l'eau mitigée M à une valeur comprise entre T_{d} et T_{f} lorsque les conditions de commande ou les variations de pression et/ou de température d'alimentation en eau chaude ou en eau froide induiraient, en l'absence de cet ensemble 16, une température supérieure à T_{f}. En pratique, les valeurs de température T_{d} et T_{f} peuvent être relativement proches.

Par ailleurs, dans le cas où une rupture d'alimentation en eau froide F survient et si la température de l'eau chaude C alimentant la cartouche est supérieure à T_{f}, aucun débit d'eau ne sort de la cartouche, jusqu'à ce que l'alimentation en eau froide soit rétablie.

Ainsi, dans tous les cas de figure, la température de l'eau mitigée M est limitée à la valeur de température T_{f}, choisie pour éviter les brûlures.

L'utilisation de l'anneau d'étanchéité 58, qui permet à la fois la fermeture étanche du passage 56 et le coulissement du clapet 34 au-delà de sa position translatée associée à la valeur de température T_{f}, évite d'intégrer à l'ensemble thermostatique 16 des systèmes complexes et plus onéreux destinés à rattraper la sur-course du piston 40 de l'élément thermostatique 36. L'encombrement de l'ensemble thermostatique 16 est par conséquent particulièrement faible, permettant à la cartouche selon l'invention de pouvoir être montée dans un corps de robinet présentant un diamètre intérieur inférieur à 40 mm. Autrement dit, la dimension maximale D, suivant l'axe Z-Z, de l'ensemble 16 est avantageusement inférieure à 40 mm.

Sur la figure 7 est représentée une variante 16' de l'ensemble thermostatique 16 des figures précédentes. Suivant cette variante, l'étanchéité entre la zone de jonction 42A de l'embase 32 et la surface extérieure cylindrique 34B du clapet 34 est assurée par un anneau d'étanchéité 58' qui, à la différence de l'anneau 58 des figures précédentes, est solidarisé à la surface 34B du clapet 34. En fonctionnement, lorsque le clapet 34 est translaté vers la paroi 54 de l'embase 32, l'anneau 58' coulisse contre la paroi de l'embase qui délimite la zone de jonction 42A.

Divers aménagements et variantes à la cartouche et à son ensemble thermostatique décrits ci-dessus sont en outre envisageables. En particulier, la géométrie de l'embase 32 peut être adaptée au robinet dans lequel la cartouche est destinée à être montée et/ou au boîtier 1 de la cartouche à équiper de l'ensemble thermostatique 16, 16'. Par ailleurs, en variante non représentée, l'embase 32 peut être venue de matière avec la base 2 du boîtier 1.

## Revendications

1. Cartouche pour un robinet mitigeur, comportant deux disques en céramique (20, 24) de réglage de la température et du débit d'un mélange de deux fluides (F, C) entrant dans la cartouche à des températures respectives différentes, **caractérisée en ce qu'**elle comporte en outre des moyens thermostatiques (16 ; 16') adaptés pour, lorsque la température du mélange (M) est supérieure à une valeur seuil prédéterminée (T_{d}), automatiquement couper, en amont des disques (20, 24), au moins en partie la circulation (E_{C}), dans la cartouche, du fluide entrant le plus chaud (C), lesquels moyens thermostatiques comportent :
- un obturateur (34) d'un passage (56) du fluide le plus chaud (C) délimité par la cartouche en amont des disques (20, 24), et
- un élément thermostatique (36) incluant à la fois une partie thermosensible (38) disposée, au moins en partie, sur le trajet d'écoulement du mélange (M) dans la cartouche et en aval des deux disques (20, 24), et une partie (40) mobile en translation par rapport à la partie thermosensible, liée en translation à l'obturateur, l'obturateur étant monté coulissant, suivant la direction de translation (Z-Z) de la partie mobile (40), dans une zone (42A) de la cartouche délimitant le passage (56) du fluide le plus chaud (C), avec interposition d'une garniture d'étanchéité (58 ; 58') qui est solidarisée soit à cette zone, soit à l'obturateur et qui, lorsque la température du mélange (M) est supérieure à la valeur seuil prédéterminée (T_{d}), est apte à former un contact étanche coulissant avec, respectivement, l'obturateur ou la zone.

2. Cartouche suivant la revendication 1, **caractérisée en ce que** la garniture d'étanchéité (58 ; 58') est réalisée en une matière élastiquement déformable.

3. Cartouche suivant l'une des revendications 1 ou 2, **caractérisée en ce que** la garniture d'étanchéité (58 ; 58') présente une forme annulaire adaptée pour maintenir le contact étanche coulissant lorsque la température du mélange (M) dépasse la température (T_{f}) associée au début de la coupure totale de la circulation (E_{c}) du fluide entrant le plus chaud (C).

4. Cartouche suivant l'une quelconque des revendications précédentes, **caractérisée en ce que** l'obturateur (34) est tubulaire et **en ce que**, si la garniture (58) est solidarisée à ladite zone (42A), la garniture est apte à former le contact étanche coulissant sur toute la périphérie de la face extérieure (34B) de l'obturateur, et, si la garniture (58') est solidarisée à l'obturateur, la garniture s'étend sur toute la périphérie de la face extérieure (34B) de l'obturateur.

5. Cartouche suivant l'une quelconque des revendications précédentes, **caractérisée en ce que** les deux disques en céramique (20, 24) sont accolés par une de leurs faces et **en ce que** la direction (Z-Z) de translation de la partie mobile (40) de l'élément thermostatique (36) par rapport à la partie thermosensible (38) est sensiblement parallèle au plan (P) d'accolement des disques.

6. Cartouche suivant l'une quelconque des revendications précédentes, **caractérisée en ce que** les moyens thermostatiques (16 ; 16') comportent une embase (32) de support de l'élément thermostatique (36) et de l'obturateur (34), délimitant, au moins en partie, le passage (56) du fluide le plus chaud (C) et adaptée pour être rapportée de manière amovible à un boîtier (1) de la cartouche, dans lequel sont agencés les disques en céramique (20, 24).

7. Cartouche suivant la revendications 6, **caractérisée en ce que** ladite zone (42A) est délimitée par l'embase (32).

8. Cartouche suivant l'une des revendications 6 ou 7, **caractérisée en ce que** l'embase (32) délimite également un passage librement traversant (60) pour le fluide entrant le plus froid (F).

9. Cartouche suivant l'une quelconque des revendications 6 à 8, **caractérisée en ce que**, suivant la direction de translation (Z-Z) de la partie mobile (40) de l'élément thermostatique (36), la dimension maximale (D) de l'embase (32) équipée de l'élément thermostatique (36) et de l'obturateur (34) est inférieure à 40 mm.

10. Cartouche suivant l'une quelconque des revendications 6 à 9, **caractérisée en ce que** les moyens thermostatiques (16 ; 16') comportent un moyen (52) de rappel de la partie mobile (40) vers la partie thermosensible (38) de l'élément thermostatique (36), ce moyen de rappel étant en appui, à la fois, sur une paroi (54) de l'embase (32) et sur l'obturateur (34).

11. Robinet mitigeur, **caractérisé en ce qu'**il est équipé une cartouche conforme à l'une quelconque des revendications précédentes.

## Patentansprüche

1. Kartusche für einen Mischhahn, die zwei Keramikscheiben (20, 24) zum Regeln der Temperatur und des Durchflusses einer Mischung von zwei Flüssigkeiten (F, C), die in die Kartusche bei jeweils unterschiedlichen Temperaturen eintreten umfasst, **dadurch gekennzeichnet, dass** sie außerdem thermostatische Mittel (16; 16') aufweist, die angepasst sind, stromaufwärts zu den Scheiben (20, 24) mindestens teilweise die Strömung (E_{C}) der wärmsten zulaufenden Flüssigkeit in der Kartusche automatisch zu trennen, wenn die Temperatur der Mischung (M) größer als ein vorbestimmter Schwellenwert (T_{d}) ist, wobei die thermostatischen Mittel umfassen:
- ein Verschlusselement (34) eines Durchgangs (56) der wärmsten Flüssigkeit (C), das durch die Kartusche stromaufwärts zu den Scheiben (20, 24) begrenzt ist, und
- ein thermostatisches Element (36), das sowohl einen thermosensiblen Teil (38), der mindestens teilweise auf dem Strömungsweg der Mischung (M) in der Kartusche und stromabwärts zu den zwei Scheiben (20, 24) angeordnet ist, und einen in Bezug auf den thermosensiblen Teil in Längsrichtung beweglichen Teil (40), der translatorisch mit dem Verschlusselement verbunden ist, einschließt,
wobei das Verschlusselement gemäß der Längsrichtung (Z-Z) des beweglichen Teils (40) in einer Zone (42A) der Kartusche gleitend montiert ist, die den Durchgang (56) der wärmsten Flüssigkeit (C) mittels der Zwischenschaltung einer Dichtung (58; 58') begrenzt, die entweder mit dieser Zone oder mit dem Verschlusselement verbunden ist und die, wenn die Temperatur der Mischung (M) größer als der vorbestimmte Schwellenwert (T_{d}) ist, in der Lage ist, einen dichten gleitenden Kontakt mit jeweils dem Verschlusselement oder der Zone zu bilden.

2. Kartusche nach Anspruch 1, **dadurch gekennzeichnet, dass** die Dichtung (58; 58') aus einem verformbaren elastischen Material hergestellt ist.

3. Kartusche nach einem der Ansprüche 1 oder 2, **dadurch gekennzeichnet, dass** die Dichtung (58; 58') eine Ringform aufweist, die angepasst ist, den dichten gleitenden Kontakt aufrechtzuerhalten, wenn die Temperatur der Mischung (M) die Temperatur (T_{f}) überschreitet, die zu Beginn des vollständigen Trennens der Strömung (E_{C}) der wärmsten zulaufenden Flüssigkeit zugeordnet ist.

4. Kartusche nach einem beliebigen der vorhergehenden Ansprüche, **dadurch gekennzeichnet, dass** das Verschlusselement (34) rohrförmig ist und dass, wenn die Dichtung (58) mit der Zone (42A) verbunden ist, die Dichtung geeignet ist, den dichten gleitenden Kontakt über den gesamten Umfang der Außenfläche (34B) des Verschlusselements zu bilden, und, wenn die Dichtung (58') mit dem Verschlusselement verbunden ist, die Dichtung sich über den gesamten Umfang der Außenfläche (34B) des Verschlusselements erstreckt.

5. Kartusche nach einem beliebigen der vorhergehenden Ansprüche, **dadurch gekennzeichnet, dass** die zwei Keramikscheiben (20, 24) mit einer ihrer Stirnflächen aneinandergelegt sind und dass die Richtung (Z-Z) der Längsbewegung des beweglichen Teils (40) des thermostatischen Elements (36) in Bezug auf den thermosensiblen Teil (38) im Wesentlichen parallel zu der Ebene (P) des Aneinanderliegens der Scheiben liegt.

6. Kartusche nach einem beliebigen der vorhergehenden Ansprüche, **dadurch gekennzeichnet, dass** die thermostatischen Mittel (16; 16') einen Sockelansatz (32) zur Lagerung des thermostatischen Elements (36) und des Verschlusselements (34) aufweist, der mindestens teilweise den Durchgang (56) der wärmsten Flüssigkeit (C) begrenzt und angepasst ist, lösbar an ein Gehäuse (1) der Kartusche, in dem die Keramikscheiben (20, 24) angeordnet sind, angesetzt zu werden.

7. Kartusche nach Anspruch 6, **dadurch gekennzeichnet, dass** die Zone (42A) durch den Sockeleinsatz (32) begrenzt ist.

8. Kartusche nach einem der Ansprüche 6 oder 7, **dadurch gekennzeichnet, dass** der Sockelansatz (32) gleichfalls einen frei hindurchgehenden Durchgang (60) für die kälteste zulaufende Flüssigkeit (F) begrenzt.

9. Kartusche nach einem der Ansprüche 6 bis 8, **dadurch gekennzeichnet, dass** die maximale Abmessung (D) des Sockelansatzes (32), der mit dem thermostatischen Element (36) und dem Verschlusselement (34) ausgerüstet ist, gemäß der Längsrichtung (Z-Z) des beweglichen Teils (40) des thermostatischen Elements (36) kleiner als 40 mm ist.

10. Kartusche nach einem beliebigen der Ansprüche 6 bis 9, **dadurch gekennzeichnet, dass** die thermostatischen Mittel (16; 16') ein Mittel (52) zum Rückstellen des beweglichen Teils (40) in Richtung des thermosensiblen Teils (38) des thermostatischen Elements (36) aufweist, wobei dieses Rückstellmittel sowohl an einer Wand (54) des Sockelansatzes (32) als auch an dem Verschlusselement (34) anliegt.

11. Mischhahn, **dadurch gekennzeichnet, dass** er mit einer Kartusche nach einem beliebigen der vorhergehenden Ansprüche ausgerüstet ist.

## Claims

1. A cartridge for a mixer faucet, comprising two ceramic disks (20, 24) for regulating the temperature and flow of a mixture of two fluids (F, C) entering the cartridge at different respective temperatures, **characterized in that** it also comprises thermostatic means (16; 16') suitable for, when the temperature of the mixture (M) is greater than a predetermined threshold value (T_{d}), automatically cutting off, upstream of the disks (20, 24), at least a portion of the circulation (E_{c}), in the cartridge, of the hottest entering fluid (C), which thermostatic means comprise:
- a stopper (34) of a passageway (56) of the hottest fluid (C) delimited by the cartridge upstream of the disks (20, 24), and
- a thermostatic element (36) including both a heat-sensitive portion (38) placed, at least partly, in the flow path of the mixture (M) in the cartridge and downstream of the two disks (20, 24), and a movable portion (40) that can move in translation relative to the heat-sensitive portion, linked in translation to the stopper, the stopper being mounted so as to slide, in the direction of translation (Z-Z) of the movable portion (40), in a zone (42A) of the cartridge delimiting the passageway (56) of the hottest fluid (C), with interposition of a packing seal (58; 58') that is fixedly attached either to said zone, or to the stopper and that, when the temperature of the mixture (M) is greater than the predetermined threshold value (T_{d}), is capable of forming a sliding sealed contact with the stopper or said zone respectively.

2. The cartridge as claimed in claim 1, **characterized in that** the packing seal (58; 58') is made of an elastically deformable material.

3. The cartridge as claimed in one of claims 1 or 2, **characterized in that** the packing seal (58; 58') has an annular shape suitable for maintaining the sliding sealed contact when the temperature of the mixture (M) exceeds the temperature (T_{f}) associated with the beginning of the total cut-off of the circulation (E_{c}) of the hottest entering fluid (C).

4. The cartridge as claimed in any one of the preceding claims, **characterized in that** the stopper (34) is tubular and **in that**, if the seal (58) is fixedly attached to said zone (42A), the seal is capable of forming the sliding sealed contact on the whole periphery of the outer face (34B) of the stopper, and, if the seal (58') is fixedly attached to the stopper, the seal extends over the whole periphery of the outer face (34B) of the stopper.

5. The cartridge as claimed in any one of the preceding claims, **characterized in that** the two ceramic disks (20, 24) are joined by one of their faces and **in that** the direction (Z-Z) of translation of the movable portion (40) of the thermostatic element (36) relative to the heat-sensitive portion (38) is substantially parallel to the joining plane (P) of the disks.

6. The cartridge as claimed in any one of the preceding claims, **characterized in that** the thermostatic means (16; 16') comprise a socket body (32) for supporting the thermostatic element (36) and the stopper (34), delimiting, at least in part, the passageway (56) of the hottest fluid (C) and suitable for being fitted removably to a case (1) of the cartridge, in which the ceramic disks (20, 24) are arranged.

7. The cartridge as claimed in claim 6, **characterized in that** said zone (42A) is delimited by the socket body (32).

8. The cartridge as claimed in one of claims 6 or 7, **characterized in that** the socket body (32) also delimits a freely traversing passageway (60) for the coldest (F) entering fluid.

9. The cartridge as claimed in any one of claims 6 to 8, **characterized in that**, in the direction of translation (Z-Z) of the movable portion (40) of the thermostatic element (36), the maximum dimension (D) of the socket body (32) fitted with the thermostatic element (36) and the stopper (34) is less than 40 mm.

10. The cartridge as claimed in any one of claims 6 to 9, **characterized in that** the thermostatic means (16; 16') comprise a return means (52) of returning the movable portion (40) to the heat-sensitive portion (38) of the thermostatic element (36), this return means pressing both on a wall (54) of the socket body (32) and on the stopper (34).

11. A mixer faucet, **characterized in that** it is fitted with a cartridge as claimed in any one of the preceding claims.
